(19) Europäisches Patentamt European Patent Office Office européen des brevets

(11) **EP 4 335 661 B1**

(12) **EUROPEAN PATENT SPECIFICATION**

(45) Date of publication and mention
of the grant of the patent:
**03.09.2025 Bulletin 2025/36**

(21) Application number: **23187420.7**

(22) Date of filing: **25.07.2023**

(51) International Patent Classification (IPC):
*B60C 9/22* (2006.01)          *B60C 9/00* (2006.01)

(52) Cooperative Patent Classification (CPC):
**B60C 9/22; B60C 9/0042;** B60C 2009/2214;
B60C 2009/2247; B60C 2009/2257;
B60C 2009/2261; B60C 2009/2266;
B60C 2009/228; B60C 2009/2285; B60C 2011/0033

(54) **TIRE**

REIFEN

PNEUMATIQUE

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: **09.09.2022 JP 2022143746**
**05.07.2023 JP 2023110726**

(43) Date of publication of application:
**13.03.2024 Bulletin 2024/11**

(73) Proprietor: **Sumitomo Rubber Industries, Ltd.**
**Kobe-shi, Hyogo 651-0072 (JP)**

(72) Inventors:
• **MISEKI, Yuta**
**Kobe-shi, 651-0072 (JP)**

• **SUZUKI, Masumi**
**Kobe-shi, 651-0072 (JP)**
• **MIKI, Takashi**
**Kobe-shi, 651-0072 (JP)**
• **OKABE, Noboru**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
WO-A1-2005/032854     WO-A1-2020/145024
WO-A1-2020/174848     WO-A1-2021/039793
DE-T5- 112019 006 708

**Description**

TECHNICAL FIELD

The present invention relates to a tire.

BACKGROUND ART

A variety of techniques have been proposed to improve various tire properties, such as ride quality, by modifying the belt-reinforcing layer of a tire including a belt layer and a belt-reinforcing layer. A tire according to the preamble of claim 1 is known from Patent Literature 2. Further tires comprising a belt layer and a belt cover layer made of polyethylene terephthalate (PET) fiber cord are described in Patent Literature 3, 4, 5, and 6.

CITATION LIST

PATENT LITERATURE

Patent Literature 1: JP 2019-188834 A
Patent Literature 2: WO 2020/174848 A1
Patent Literature 3: WO 2020/145024 A1
Patent Literature 4: WO 2005/032854 A1
Patent Literature 5: DE 11 2019 006708 T5
Patent Literature 6: WO 2021/039739 A1

SUMMARY OF INVENTION

TECHNICAL PROBLEM

Meanwhile, in these days of well-developed highways and improved vehicle performance, it is not uncommon to drive long distances at high speeds. Thus, there seems to be a need for further improvements in durability during high-speed driving and ride quality.
The present invention aims to solve the above problem and provide a tire with excellent overall performance in terms of durability during high-speed driving and ride quality.

SOLUTION TO PROBLEM

The present invention relates to a tire, including a belt layer and a belt-reinforcing layer, the belt-reinforcing layer including at least one organic fiber cord including a polyethylene terephthalate fiber cord, the organic fiber cord having an elastic modulus A at a load of 2.0 cN/dtex at 100°C that is less than 3.5 cN/(tex·%).

ADVANTAGEOUS EFFECTS OF INVENTION

The present invention relates to a tire including a belt layer and a belt-reinforcing layer, in which the belt-reinforcing layer includes at least one organic fiber cord including a polyethylene terephthalate fiber cord, and the organic fiber cord has an elastic modulus A at a load of 2.0 cN/dtex at 100°C that is less than 3.5 cN/(tex·%). Thus, the present invention can provide a tire with excellent overall performance in terms of durability during high-speed driving and ride quality.

BRIEF DESCRIPTION OF DRAWINGS

FIG. 1 shows a cross-section of a pneumatic tire of the present invention.

FIG. 2 shows an enlarged view of a belt layer and a belt-reinforcing layer in FIG. 1.

FIG. 3 shows an enlarged view of a tread portion.

FIGs. 4 A and 4B show schematic views of two-strand twisted cords.

DESCRIPTION OF EMBODIMENTS

The present invention relates to a tire including a belt-reinforcing layer which includes at least one organic fiber cord including a polyethylene terephthalate fiber cord (hereinafter, also referred to as PET fiber cord), and the organic fiber cord has an elastic modulus A at a load of 2.0 cN/dtex at 100°C that is less than 3.5 cN/(tex·%).

The reason for the above-described advantageous effect is not exactly clear, but it is believed to be due to the following mechanism.

It is considered that as the PET fiber has a benzene ring in the molecular chain and partly forms a crystalline structure, it has a higher strength than other fibers; additionally, it has a flexible molecular chain and can easily absorb vibrations internally.

Moreover, it is considered that as the elastic modulus at a high temperature is reduced to less than 3.5 cN/(tex·%), ride quality is improved due to the ability to absorb vibrations in the molecular chain and also because the belt layer is allowed to moderately stretch and deform when the tread portion contacts the ground during high-speed driving, and therefore the tread portion shows improved contact performance and can absorb impacts from the road surface in the plane.

At the same time, it is also considered that the local accumulation of deformation in the tread portion is suppressed, and the belt-reinforcing layer is less likely to be broken, with the result that durability during high-speed driving is improved.

Therefore, it is believed that the overall performance in terms of durability during high-speed driving and ride quality can be improved.

Thus, the problem (purpose) of improving overall performance in terms of durability during high-speed driving and ride quality is solved by formulating a tire including a belt-reinforcing layer that satisfies the condition "the organic fiber cord having an elastic modulus A at a load of 2.0 cN/dtex at 100°C that is less than 3.5 cN/(tex·%)". In other words, the parameter "the organic fiber cord having an elastic modulus A at a load of 2.0 cN/dtex at 100°C that is less than 3.5 cN/(tex·%)" does not define the problem (purpose), and the problem herein is to improve overall performance in terms of durability during high-speed driving and ride quality. In order to solve this problem, the tire has been formulated to satisfy the parameter.

Although embodiments of the present invention are described below with reference to the drawings, these embodiments are merely exemplary embodiments, and the tire of the present invention is not limited to the following embodiments.

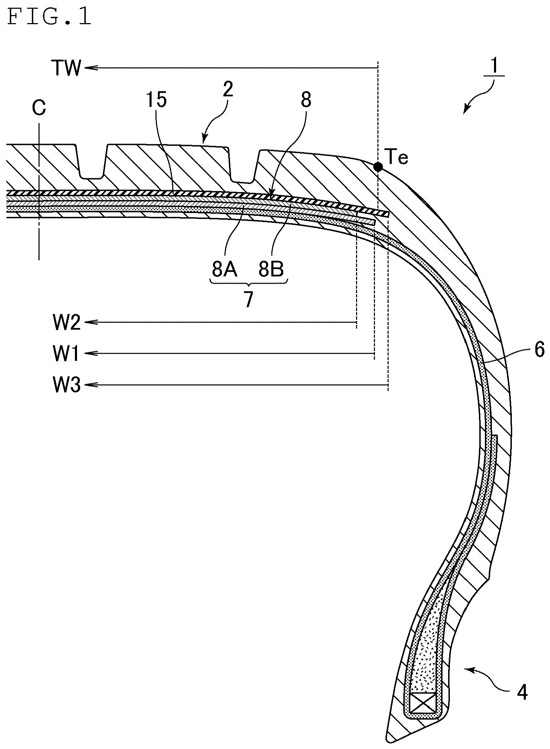

FIG. 1 shows an exemplary tire meridional cross-sectional view of a right half of a pneumatic tire (hereinafter, also referred to simply as "tire") 1 according to the present embodiment in the normal state, including the axis of rotation (not shown) of the tire. For example, the tire 1 shown in FIG. 1 is for passenger cars. However, the present invention is applicable to a tire 1 for motorcycles, heavy duty vehicles, or other types of vehicles.

The term "normal state" refers to a state where the tire 1 is mounted on a normal rim (not shown), inflated to a normal internal pressure, and under no load.

The term "normal rim" refers to a rim specified for each tire by the standard in a standard system including standards according to which the tire 1 is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organization (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any standard, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard in a standard system including standards according to which the tire 1 is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 KPa or more for another tire size defined by any of the standards, for which the normal rim is listed as the standard rim. Here, when a plurality of normal internal pressures of 250 KPa or more are listed, it refers to the smallest one of these normal internal pressures.

The tire 1 of the present embodiment includes a belt layer 7 that is embedded inwardly in the tire radial direction from the tread surface of a tread portion 2. The belt layer 7 includes at least one belt ply 8. The tire 1 includes a belt-reinforcing layer 15 that is located outward of the belt layer 7 in the tire radial direction. For example, the tire 1 also includes a carcass 6 with a well-known structure that is located inward of the belt layer 7 in the tire radial direction and extends between opposite bead portions 4.

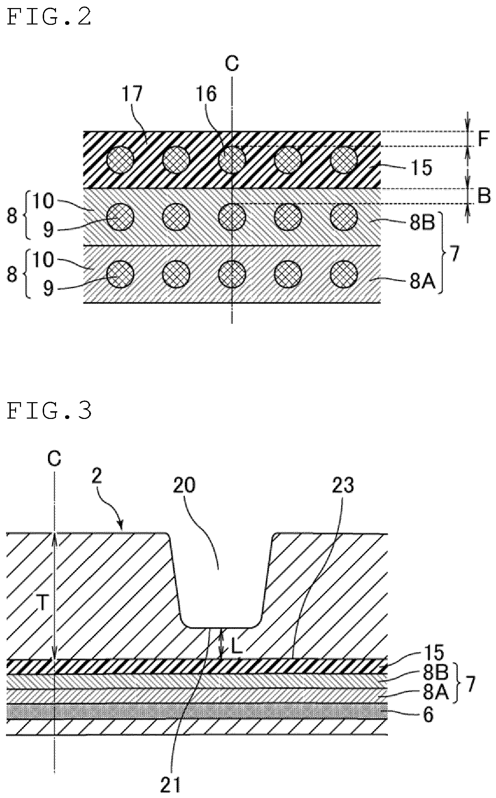

FIG. 2 shows an enlarged view of the belt plies 8 and the belt-reinforcing layer 15.

As shown in FIG. 2, each belt ply 8 includes a belt cord 9 and a topping rubber 10 coating the belt cord 9. Although each belt cord 9 in the present embodiment is a single wire having a circular transverse section, it is not limited to this embodiment and may be a cord having a M × N structure in which N bundles of M filaments are intertwined with each other. Moreover, the cross-sectional shape of each filament is not limited to a circular shape, and it may have other shapes, such as an oval or polygonal shape in transverse section. In view of properties such as durability, the filaments may also be preformed before use.

As shown in FIG. 2, for example, the belt plies 8 include a first belt ply 8A and a second belt ply 8B that is adjacent to the first belt ply 8A in the tire radial direction. For example, the second belt ply 8B is located outward of the first belt ply 8A in the tire radial direction.

For example, the width W1 in the tire axial direction of the first belt ply 8A is desirably 70 to 100% of the tread width TW. For example, the width W2 in the tire axial direction of the second belt ply 8B is desirably 65 to 90% of the tread width TW. Moreover, the second belt ply preferably has a smaller width than the first belt ply.

The term "tread width TW" refers to the distance in the tire axial direction between the tread edges Te, Te on opposite sides with respect to the tire axial direction. The term "tread edge Te" refers to the axially outermost contact position of the tire 1 determined when a normal load is applied to the tire 1 in the above-described normal state and contacted with a plane at a camber angle of 0 degrees. The tread width TW may be determined by measuring the distance between the contact edges in the tire axial direction in a cross-section of the tire taken along the radial direction, with the width between the bead portions being fixed to the normal rim width. Moreover, the width W1 of the first belt ply and the width W2 of the second belt ply may also be determined by measuring the distance between the respective edges in the tire axial direction in a cross-section of the tire taken along the radial direction, with the width between the bead portions being fixed to the normal rim width.

The term "normal load" refers to a load specified for each tire by the standard in a standard system including standards according to which the tire 1 is provided, and may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following equation.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume ($mm^3$) of tire
Dt: outer diameter (mm) of tire
Ht: cross-sectional height (mm) of tire
Wt: cross-sectional width (mm) of tire

The belt cords 9 in the present embodiment are examples formed of steel cords. Such belt cords 9 can reduce deformation of the belt plies 8 during driving. Here, for example, the belt cords 9 may be formed of organic fiber cords such as aramid. The belt cord 9 in the first belt ply 8A and the belt cord 9 in the second belt ply 8B may be of the same material or the same shape or may be of different materials or different shapes.

The belt cords 9 are desirably inclined at an angle of 15 to 45 degrees with respect to the tire circumferential direction.

The belt cord 9 in the first belt ply 8A and the belt cord 9 in the second belt ply 8B are desirably inclined in opposite directions with respect to the tire circumferential direction so that the respective cords cross each other, though the present invention is not limited to this embodiment.

In view of adhesion to the rubber composition coating surrounding the belt cord 9, a plating containing copper and zinc is preferably applied to the surface of the belt cord 9. Moreover, a plating is more preferably applied which contains a metallic element whose ionization tendency is between those of copper and zinc, such as cobalt, nickel, bismuth, or antimony, in addition to the copper and zinc.

Also, in view of adhesion to the surrounding rubber composition, the belt cord 9 preferably has a polybenzoxazine compound layer on the surface.

The topping rubber 10 coating the belt cord 9 desirably contains a well-known rubber material as well as a phenolic thermosetting resin, silica, a salt of an organic fatty acid and a metal whose ionization tendency is between those of copper and zinc, such as cobalt, nickel, bismuth, or antimony as described above, a polybenzoxazine compound, or other materials.

For example, the number of belt cords 9 (ends) per 50 mm width of the belt plies 8 is preferably at least 30/50 mm but not more than 100/50 mm, more preferably at least 30/50 mm but not more than 80/50 mm. Moreover, the cross-sectional area of the cords per 50 mm in the tire width direction, which is the product of the number of belt cords 9 (ends/50 mm) and the cross-sectional area ($mm^2$) of each belt cord, is preferably 4.5 $mm^2$/50 mm or more, more preferably 4.8 $mm^2$/50 mm or more.

In the tire 1, the belt-reinforcing layer 15 may enhance the restraint of the belt plies 8A and 8B to enhance durability during high-speed driving and can also impart good ride quality.

Like the tread width TW, the width W3 of the belt-reinforcing layer (the width in the tire axial direction of the belt-reinforcing layer 15) may be determined by measuring the distance between the ends of the belt-reinforcing layer 15 in the tire axial direction in a cross-section of the tire taken along the radial direction, with the width between the bead portions being fixed to the normal rim width.

The belt-reinforcing layer 15 contains at least one organic fiber cord 16 and a reinforcement rubber 17 (belt-reinforcing layer coating rubber composition) coating the organic fiber cord 16, and the organic fiber cord 16 includes a polyethylene terephthalate fiber cord. Here, the organic fiber cord has usually been subjected to dipping treatment to improve adhesion to the rubber.

In the belt-reinforcing layer 15, the angle of the organic fiber cord 16 with respect to the tire circumferential direction is desirably 0 to 5 degrees, for example. The belt-reinforcing layer 15 desirably includes a full cover layer which entirely covers the belt plies 8. In addition to the full cover layer, a structure (two- or more-layered structure) may also be used which includes a pair of edge cover layers locally covering both ends of the belt ply 8. The belt-reinforcing layer 15 should be formed by aligning at least one organic fiber cord 16 and coating it with a coating rubber to prepare a strip material, and spirally winding the strip material in the tire circumferential direction. In particular, it desirably has a jointless structure.

The organic fiber cord 16 including a polyethylene terephthalate fiber cord has an elastic modulus A at a load of 2.0 cN/dtex at 100°C that is less than 3.5 cN/(tex·%). The elastic modulus is preferably 3.0 cN/(tex·%) or less, more preferably 2.8 cN/(tex·%) or less, still more preferably 2.5 cN/(tex·%) or less. The lower limit of the elastic modulus is not limited, but it is preferably 1.0 cN/(tex·%) or more, more preferably 1.8 cN/(tex·%) or more, still more preferably 2.2 cN/(tex·%) or more. When the elastic modulus is within the range indicated above, the advantageous effect can be suitably achieved. Here, a similar range is desirable for the polyethylene terephthalate fiber cord.

Here, the elastic modulus A (cN/(tex·%)) at a load of 2.0 cN/dtex at 100°C is calculated in accordance with "Test methods for chemical fibre tire cords" in JIS L 1017 by performing a tensile test at a grip distance of 250 mm and a tensile rate of 300 ± 20 mm/min and converting the slope of the tangent line at the point corresponding to a load of 2.0 cN/dtex on the load-elongation curve to a value per tex. It should be noted that the elastic modulus is determined for the cord taken from the vulcanized tire.

The organic fiber cord 16 including a polyethylene terephthalate fiber cord desirably has an elongation at a specific load of 2.0 cN/dtex at 100°C that is at least 7.0% but not more than 13.2%. The lower limit of the elongation at a specific load is preferably 8.2% or more, more preferably 8.5% or more, still more preferably 8.8% or more, further preferably 9.1% or more, particularly preferably 9.7% or more. The upper limit of the elongation at a specific load is preferably 13.0% or less, more preferably 12.5% or less, still more preferably 12.0% or less. When the elongation at a specific load is within the range indicated above, the advantageous effect can be suitably achieved. Here, a similar range is desirable for the polyethylene terephthalate fiber cord.

The mechanism by which the advantageous effect can be better achieved by adjusting the elongation at a specific load within the above range is not clear, but it is believed that the cord with such an elongation at a specific load can moderately stretch easily at high temperatures, thereby improving overall performance in terms of durability during high-speed driving and ride quality.

Here, the elongation (%) at a specific load of 2.0 cN/dtex at 100°C is determined in accordance with JIS L 1017:2002 by collecting one cord from the vulcanized tire and performing a tensile test at a temperature of 100 ± 2°C, a grip distance of 250 mm, and a tensile rate of 300 ± 20 mm/min and is defined as the elongation (%) at the point corresponding to a load of 2.0 cN/dtex on the load-elongation curve.

The organic fiber cord 16 including a polyethylene terephthalate fiber cord desirably has a twist factor K defined by the equation below that is at least 1600 but not more than 4500. The lower limit of the twist factor K is preferably 1642 or more, more preferably 2100 or more, still more preferably 2200 or more, further preferably 2251 or more, further preferably 2255 or more, further preferably 2400 or more, further preferably 2600 or more, further preferably 2683 or more. The upper limit of the twist factor K is preferably 4312 or less, more preferably 4300 or less, still more preferably 3100 or less, further preferably 3049 or less, further preferably 3000 or less, further preferably 2952 or less, particularly preferably 2900 or less.

When the twist factor K is within the range indicated above, the advantageous effect can be suitably achieved. A similar range is desirable for the polyethylene terephthalate fiber cord.

$$K = T \times D^{1/2}$$

In the equation, T represents the final twist number (turns/10 cm) of the cord, and D represents the total fineness (dtex) of the cord.

The mechanism by which the advantageous effect can be better achieved by adjusting the twist factor within the above range, particularly within the range of 2100 to 4300, is not clear, but it is believed that the cord with such a twist factor can moderately stretch easily at high temperatures, thereby improving overall performance in terms of durability during high-speed driving and ride quality.

The organic fiber cord 16 including a polyethylene terephthalate fiber cord is desirably formed from a cord with a twist number of at least 10 turns/10 cm but not more than 80 turns/10 cm. The twist number is preferably 34 turns/10 cm or more, more preferably 35 turns/10 cm or more, still more preferably 40 turns/10 cm or more, further preferably 48 turns/10 cm or more, particularly preferably 50 turns/10 cm or more. The upper limit of the twist number is preferably 70 turns/10 cm or less, more preferably 65 turns/10 cm or less, still more preferably 60 turns/10 cm or less, further preferably 55 turns/10 cm or less. When the twist number is within the range indicated above, the advantageous effect can be suitably achieved. A similar range is desirable for the polyethylene terephthalate fiber cord. Here, the twist number is determined for the cord after dipping treatment.

The organic fiber cord 16 including a polyethylene terephthalate fiber cord is desirably formed from a cord with a total fineness of at least 450 dtex but not more than 5500 dtex. The total fineness is preferably 1000 dtex or more, more preferably 2000 dtex or more, still more preferably 2200 dtex or more, particularly preferably 2500 dtex or more. The upper limit of the total fineness is preferably 4400 dtex or less, more preferably 4000 dtex or less, still more preferably 3000 dtex or less, further preferably 2880 dtex or less, particularly preferably 2800 dtex or less. When the total fineness is within the range indicated above, the advantageous effect can be suitably achieved. A similar range is desirable for the polyethylene terephthalate fiber cord.

Here, the total fineness is measured in accordance with "8.3. Fineness based on corrected mass" in JIS L 1017.

The organic fiber cord 16 including a polyethylene terephthalate fiber cord preferably has a load G at 3% elongation of 15 N or more, more preferably 18 N or more, still more preferably 25 N or more, particularly preferably 30 N or more, but preferably 55 N or less, more preferably 45 N or less, still more preferably 40 N or less, further preferably 38 N or less, particularly preferably 35 N or less. When the load G is within the range indicated above, the advantageous effect can be suitably achieved. A similar range is desirable for the polyethylene terephthalate fiber cord.

Here, the load G at 3% elongation of the organic fiber cord is measured for the cord taken from the vulcanized tire in accordance with the test method of "load at specified elongation" specified in "Test methods for chemical fibre tire cords" in JIS L 1017 and is defined as the load (N) at 3% elongation on the load-elongation curve of the cord.

The organic fiber cord 16 including a polyethylene terephthalate fiber cord is desirably aligned at a density corresponding to a number of cords (ends) per 50 mm width in the tire axial direction that is at least 30/50 mm but not more than 80/50 mm. The lower limit of the number of cords is preferably 34/50 mm or more, more preferably 40/50 mm or more, still more preferably 45/50 mm or more, while the upper limit is preferably 78/50 mm or less, more preferably 65/50 mm or less, still more preferably 60/50 mm or less, further preferably 49/50 mm or less. When the number of cords is within the range indicated above, the advantageous effect can be suitably achieved. A similar range is desirable for the polyethylene terephthalate fiber cord.

Here, the number of organic fiber cords 16 (ends) can be determined by counting the number of reinforcing materials aligned within the range of ± 50 mm from the equator in the tire width direction in a radial cross-section of the tire, with the width between the bead portions being fixed to the normal rim width, followed by calculating the number per 50 mm.

The organic fiber cord 16 including a polyethylene terephthalate fiber cord desirably has a product of G × E of at least 700 but not more than 2700, where G represents the load (N) at 3% elongation, and E represents the number of cords per 50 mm width (ends/50 mm) in the tire axial direction.

The product (G × E) is preferably 735 or more, more preferably 882 or more, still more preferably 1000 or more, further preferably 1170 or more, further preferably 1200 or more, further preferably 1300 or more, further preferably 1350 or more. The upper limit of the product is preferably 2695 or less, more preferably 2500 or less, still more preferably 1862 or less, further preferably 1715 or less, further preferably 1700 or less, further preferably 1575 or less, further preferably 1500 or less. When the product is within the range indicated above, the advantageous effect can be suitably achieved. A similar range is desirable for the polyethylene terephthalate fiber cord.

The mechanism by which the advantageous effect can be better achieved by adjusting the product of the load at 3% elongation × the number of cords within the above range, particularly within the range of 1000 to 2500, is not clear, but it is considered as follows. It is considered that during high-speed driving, where the temperature inside the tire can rise to increase the internal pressure, the tire can easily expand so that the tread surface has a round shape. Then, it is considered that adjusting the product of the load at 3% elongation × the number of cords to 1000 or more can reduce changes in tread shape due to compression and deformation of the tread portion by the internal pressure. Thus, it is possible to reduce the deformation of the tread portion when the tread contacts the ground during high-speed driving and thus to suppress excessive heat build-up, thereby further improving durability during high-speed driving. Consequently, it is believed that the overall performance in terms of durability during high-speed driving and ride quality can be improved.

The degree of elongation of the organic fiber cord 16 (organic fiber cord 16 including a polyethylene terephthalate fiber cord) within the belt-reinforcing layer 15 of the tire is desirably at least 1.5% but not more than 5.2%. The lower limit of the degree of elongation is preferably 1.8% or more, more preferably 2.0% or more, still more preferably 2.4% or more, particularly preferably 2.8% or more, while the upper limit is preferably 5.0% or less, more preferably 4.5% or less, still more preferably 4.0% or less, particularly preferably 3.8% or less. When the degree of elongation is within the range indicated above, the advantageous effect can be suitably achieved. A similar range is desirable for the polyethylene terephthalate fiber cord. Here, the degree of elongation is determined for the cord within the vulcanized tire.

The modulus of the load-elongation curve at 100°C at the specified degree of elongation (%) (the modulus at the degree of elongation of the organic fiber cord within the belt-reinforcing layer) is desirably at least 1.0 cN/(tex·%) but not more than 5.0 cN/(tex·%). The lower limit of the modulus is preferably 1.6 cN/(tex·%) or more, more preferably 3.5 cN/(tex·%) or more, still more preferably 4.0 cN/(tex·%) or more, while the upper limit is preferably 4.7 cN/(tex·%) or less, more preferably 4.5 cN/(tex·%) or less, still more preferably 4.3 cN/(tex·%) or less. When the modulus is within the range indicated above, the advantageous effect can be suitably achieved. A similar range is desirable for the polyethylene terephthalate fiber cord. Here, the modulus at the specified degree of elongation (%) is determined for the cord taken from the vulcanized tire.

The mechanism by which the advantageous effect can be better achieved by adjusting the modulus at the specified degree of elongation (%) within the above range is not clear, but it is believed that the cord with such a modulus can maintain moderate restraining force, thereby improving overall performance in terms of durability during high-speed driving and ride quality.

Here, the degree (%) of elongation of the organic fiber cord within the belt-reinforcing layer of the tire is determined by separating the tread portion from the tire not mounted on a rim to measure the length of the organic fiber cord within the belt-reinforcing layer, and then taking the organic fiber cord from the belt-reinforcing layer to measure the actual length of the organic fiber cord, followed by calculating the degree of elongation by the following equation:

Degree (%) of elongation = { (length (mm) of organic fiber cord within belt-reinforcing layer - actual length (mm) of organic fiber cord) /actual length (mm) of organic fiber cord} × 100.

Moreover, the modulus of the load-elongation curve at 100°C at the degree of elongation (%) of the organic fiber cord within the belt-reinforcing layer is calculated by determining the degree (%) of elongation of the organic fiber cord within the belt-reinforcing layer by the above-mentioned calculation method, and then subjecting the organic fiber cord to a tensile test (100°C) in accordance with "Test methods for chemical fibre tire cords" in JIS L 1017 to determine the modulus (N/%) at the determined degree (%) of elongation on the load-elongation curve.

The organic fiber cord 16 (organic fiber cord 16 including a polyethylene terephthalate fiber cord) preferably has a filament angle of 11 degrees or greater, more preferably 14 degrees or greater, still more preferably 15 degrees or greater, further preferably 16 degrees or greater, further preferably 30 degrees or greater, further preferably 40 degrees or greater, particularly preferably 45 degrees or greater. The upper limit of the filament angle is not limited, but it is preferably 70 degrees or less, more preferably 60 degrees or less, still more preferably 55 degrees or less. When the filament angle is within the range indicated above, the advantageous effect can be suitably achieved. A similar range is desirable for the polyethylene terephthalate fiber cord.

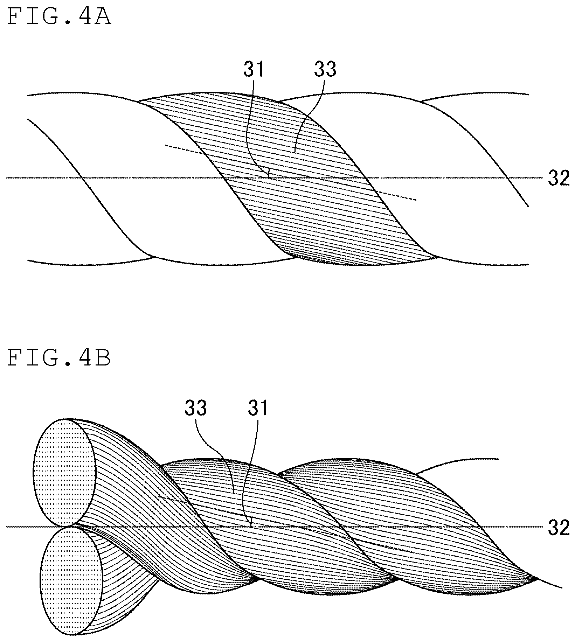

In the present invention, the filament angle 31 refers to the angle of an acute angle formed by a longitudinal center line 32 of the cord and a filament 33 as shown in the schematic views of two-strand twisted cords of FIGs. 4A and 4B.

The organic fiber cord 16 (organic fiber cord 16 including a polyethylene terephthalate fiber cord) is preferably aligned at an angle within ±10 degrees with respect to the tire circumferential direction, for example. This can enhance restraint in the tire circumferential direction to enhance durability. Although the organic fiber cord 16 in the present embodiment has a circular transverse section, it is not limited to a circular shape and may have other shapes, such as an oval or polygonal shape in transverse section.

The polyethylene terephthalate (PET) fibers of the organic fiber cord 16 (organic fiber cord 16 including a polyethylene terephthalate fiber cord) may be synthetic fibers or biomass-derived fibers. Also, in view of life cycle assessment, they are desirably derived from a recycled or reclaimed material. The fibers may also be formed of a single component including synthetic fibers, biomass fibers, or recycled or reclaimed fibers. Also usable are hybrid cords obtained by intertwining these fibers, multifilament cords obtained by combining the respective filaments, and cords with a chemical structure in which the respective components are chemically bound to each other.

The organic fiber cord 16 may consist only of a polyethylene terephthalate fiber cord (PET cord) or may be a hybrid cord with another organic fiber cord such as a polyamide or cellulose fiber cord.

When the PET cord is a biomass-derived PET cord, it may suitably be, for example, a biomass PET cord formed from biomass-derived terephthalic acid or ethylene glycol.

The biomass PET cord can be formed from biomass terephthalic acid, biomass ethylene glycol, etc. which are produced by converting bioethanol or furfurals, carenes, cymenes, terpenes, etc., or converting various animal- or plant-derived compounds, or directly fermenting microorganisms or the like.

Examples of the polyamide fibers include aliphatic polyamides, semi-aromatic polyamides, and fully aromatic polyamides.

Aliphatic polyamides refer to polyamides having a backbone in which straight carbon chains are connected via amide bonds. Examples include Nylon 4 (PA4), Nylon 410 (PA410), Nylon 6 (PA6), Nylon 66 (PA66), Nylon 610 (PA610), Nylon 10 (PA10), Nylon 1010 (PA1010), Nylon 1012 (PA1012), and Nylon 11 (PA11). Among these are Nylon 4, Nylon 410, Nylon 610, Nylon 10, Nylon 1010, Nylon 11, etc. which can be easily formed partially or fully from biomass-derived materials.

Examples of Nylon 6 and Nylon 66 include those which are produced by ring-opening polymerization of conventional chemically synthesized caprolactam and those which are produced by condensation polymerization of hexamethylenediamine and adipic acid. Other examples include Nylon 6 and Nylon 66 produced from bio-caprolactam, or bio-adipic acid and bio-hexamethylenediamine made from bio-derived cyclohexane as a starting material. Moreover, the above-mentioned biological raw materials may be formed from sugars such as glucose. Such Nylon 6 and Nylon 66 are considered to have a similar strength to conventional ones.

Non-limiting typical examples of Nylon 4 include those made from 2-pyrrolidone produced by converting bio-fermented glutamic acid to $\gamma$-aminobutyric acid. Since Nylon 4 features good thermal/mechanical stability and easy polymer structure design, it contributes to improvements in tire performance and strength and therefore can be suitably used.

Nylon 410, Nylon 610, Nylon 1010, Nylon 1012, Nylon 11, etc. may be made from ricinoleic acid obtained from castor oil (*Ricinus communis*), etc. Specifically, Nylon 410, Nylon 610, and Nylon 1010 can be produced by condensation polymerization of sebacic acid or dodecanedioic acid obtained from castor oil with any diamine compound. Nylon 11 can be produced by condensation polymerization of 11-aminoundecanoic acid obtained from castor oil.

Semi-aromatic polyamides refer to polyamides having an aromatic ring on a part of the molecular chain. Examples include Nylon 4T (PA4T), Nylon 6T (PA6T), and Nylon 10T (PA10T).

Nylon 4T, Nylon 6T, and Nylon 10T can be produced by condensation polymerization of terephthalic acid as a dicarboxylic acid with any diamine compound having the corresponding number of carbons. Here, these nylon materials may be produced from the biomass-derived terephthalic acid described above. They have a rigid cyclic structure in the molecular chain and therefore are excellent in properties such as heat resistance.

Other examples of the above-described aliphatic polyamides and semi-aromatic polyamides include polyamide 5X (wherein X represents the number of carbons derived from the dicarboxylic acid and is an integer or T indicating terephthalic acid) produced by polymerizing 1,5-pentanediamine derived from lysine with a dicarboxylic acid.

Examples of the fully aromatic polyamides include polyamides having a backbone in which aromatic rings are connected via amide bonds, such as polyparaphenylene telephthalamide. Like the above-mentioned aliphatic polyamides and semi-aromatic polyamides, the fully aromatic polyamides may be produced by binding biomass-derived terephthalic acid to phenylenediamine.

Examples of the cellulose fibers include rayon, polynosic, cupra, acetate, lyocell, modal, and other fibers produced from plant materials such as woods pulp. These cellulose fibers are preferred because they have excellent environmental performance in that, for example, they are not only made from carbon-neutral raw materials, but are also biodegradable and do not emit toxic gases when burned after use. In view of the balance of process efficiency, environmental friendliness, and mechanical strength, rayon, polynosic, and lyocell are particularly preferred among these.

The cord may also be a recycled cord obtained by recovery and refinement from used products such as drink bottles or clothing, followed by re-spinning, regardless of whether it is a synthetic or biomass-derived cord.

The organic fiber cord may be formed by intertwining one or more filaments. Examples include those formed by combining and first twisting two 1100 dtex multifilaments (i.e., 1100/2 dtex) for 48 times per 10 cm, followed by combining and final twisting two first twisted cords for the same number of times in the opposite or same direction with respect to that of the first twisting, and those formed by combining and first twisting two 1670 dtex multifilaments (i.e., 1670/2 dtex) for 40 times per 10 cm, followed by combining and final twisting two first twisted cords.

Moreover, the organic fiber cord is preferably previously coated with an adhesive layer to ensure good adhesion to the coating layer. The adhesive layer may be a known one. Examples include those formed by treatment with a resorcinol-formaldehyde-rubber latex (RFL), as well as those formed by epoxy treatment with an adhesive composition containing a sorbitol polyglycidyl ether and a blocked isocyanate and then RFL treatment, and those formed by treatment with an adhesive composition containing a halohydrin compound, a blocked isocyanate compound, and a rubber latex.

Examples of the resorcinol-formaldehyde-rubber latex (RFL) include an adhesive composition containing a natural rubber and/or synthetic rubber latex and a co-condensate of phenol-formaldehyde and resorcinol as described in JP S48-11335 A, which is hereby incorporated by reference in its entirety. Such an adhesive composition can be prepared by, for example, a method including condensing phenol and formaldehyde in the presence of an alkaline catalyst, copolymerizing an aqueous phenol-formaldehyde resin solution with resorcinol, and mixing the resulting phenol-formaldehyde-resorcinol resin solution with a latex rubber.

Here, examples of the synthetic rubber latex include polybutadiene polymer latex, styrene-butadiene copolymer latex, polyisoprene polymer latex, butadiene-acrylonitrile copolymer latex, butadiene-vinyl pyridine polymer latex, and butadiene-vinylpyridine-styrene copolymer latex.

The adhesive layer formed of the resorcinol-formaldehyde-rubber latex (RFL) may be formed by attaching a RFL adhesive (for example, by dipping the cord in a RFL liquid). The RFL adhesive is usually attached after a fiber cord is obtained by twisting, but it may be attached before or during the twisting.

The composition of the RFL adhesive is not limited and may be appropriately selected. In particular, it is preferably a composition that contains 0.1 to 10% by mass of resorcinol, 0.1 to 10% by mass of formaldehyde, and 1 to 28% by mass of latex, more preferably a composition that contains 0.5 to 3% by mass of resorcinol, 0.5 to 3% by mass of formaldehyde, and 10 to 25% by mass of latex.

For example, heating may be performed by drying a cord with a RFL adhesive composition attached thereto at 100 to 250°C for one to five minutes and then heating the resulting cord at 150 to 250°C for one to five minutes. The heating conditions after the drying are desirably at 180 to 240°C for one to two minutes.

The adhesive composition containing a sorbitol polyglycidyl ether and a blocked isocyanate may be any composition that contains a sorbitol polyglycidyl ether and a blocked isocyanate. In particular, the adhesive composition desirably contains an epoxy compound that is a sorbitol polyglycidyl ether and has a chlorine content of 9.6% by mass or lower, and a blocked isocyanate.

Examples of the sorbitol polyglycidyl ether include sorbitol diglycidyl ether, sorbitol triglycidyl ether, sorbitol tetraglycidyl ether, sorbitol pentaglycidyl ether, sorbitol hexaglycidyl ether, and mixtures thereof, each of which may contain sorbitol monoglycidyl ether. The sorbitol polyglycidyl ether has a large number of epoxy groups in one molecule and can form a highly crosslinked structure.

The chlorine content of the sorbitol polyglycidyl ether is preferably 9.6% by mass or lower, more preferably 9.5% by mass or lower, still more preferably 9.4% by mass or lower, particularly preferably 9.3% by mass or lower. The lower limit of the chlorine content is not limited and may be 1% by mass or higher, for example.

In the present invention, the chlorine content of the sorbitol polyglycidyl ether can be determined as described in JIS K 7243-3.

The chlorine content of the sorbitol polyglycidyl ether may be reduced, for example, by reducing the amount of epichlorohydrin used in the synthesis of the epoxy compound.

The blocked isocyanate is a compound produced by reaction of an isocyanate compound and a blocking agent, which is temporarily deactivated by the group derived from the blocking agent. When heated at a predetermined temperature, the group derived from the blocking agent can dissociate to form an isocyanate group.

Examples of the isocyanate compound include those having two or more isocyanate groups in the molecule.

Examples of diisocyanates having two isocyanate groups include hexamethylene diisocyanate, diphenylmethane diisocyanate, xylylene diisocyanate, isophorone diisocyanate, phenylene diisocyanate, tolylene diisocyanate, trimethylhexamethylene diisocyanate, metaphenylene diisocyanate, naphthalene diisocyanate, diphenyl ether diisocyanate, diphenylpropane diisocyanate, and biphenyl diisocyanate, as well as isomers, alkylsubstituted products, halides, and benzene ring-hydrogenated products of these diisocyanates. Also usable are triisocyanates having three isocyanate groups, tetraisocyanates having four isocyanate groups, polymethylene polyphenyl polyisocyanates, etc. These isocyanate compounds may be used alone or in combinations of two or more. Tolylene diisocyanate, metaphenylene diisocyanate, diphenylmethane diisocyanate, hexamethylene diisocyanate, and polymethylene polyphenyl polyisocyanate are preferred among these.

Examples of the blocking agent include lactam blocking agents such as $\varepsilon$-caprolactam, $\delta$-valerolactam, $\gamma$-butyrolactam, and $\beta$-propiolactam; phenolic blocking agents such as phenol, cresol, resorcinol, and xylenol; alcohol blocking agents such as methanol, ethanol, n-propyl alcohol, isopropyl alcohol, n-butyl alcohol, isobutyl alcohol, tert-butyl alcohol, ethylene glycol monoethyl ether, ethylene glycol monobutyl ether, diethylene glycol monoethyl ether, propylene glycol monomethyl ether, and benzyl alcohol; oxime blocking agents such as formamidoxime, acetaldoxime, acetoxime, methyl ethyl ketoxime, diacetyl monoxime, benzophenone oxime, and cyclohexanone oxime; and active methylene blocking agents such as dimethyl malonate, diethyl malonate, ethyl acetoacetate, methyl acetoacetate, and acetylacetone. Lactam blocking agents, phenolic blocking agents, and oxime blocking agents are preferred among these.

In the adhesive composition containing a sorbitol polyglycidyl ether and a blocked isocyanate, the amount of the blocked isocyanate per 100 parts by mass of the sorbitol polyglycidyl ether is preferably 50 parts by mass or more, more preferably 200 parts by mass or more. The upper limit of the amount is preferably 500 parts by mass or less, more preferably 400 parts by mass or less.

The adhesive composition containing a sorbitol polyglycidyl ether and a blocked isocyanate may optionally contain any of the following optional components: epoxy compounds other than the sorbitol polyglycidyl ether, resins coporimerizable with the sorbitol polyglycidyl ether, curing agents other than the blocked isocyanate, organic thickeners, antioxidants, photostabilizers, adhesion improvers, reinforcing agents, softeners, colorants, leveling agents, flame retardants, antistatic agents, etc.

Examples of the epoxy compounds other than the sorbitol polyglycidyl ether include glycidyl ethers such as ethylene glycol glycidyl ether, glycerol polyglycidyl ether, diglycerol polyglycidyl ether, polyglycerol polyglycidyl ether, bisphenol A diglycidyl ether, bisphenol S diglycidyl ether, novolac glycidyl ether, and brominated bisphenol A diglycidyl ether; glycidyl esters such as hexahydrophthalic acid glycidyl ester and dimer acid glycidyl ester; glycidyl amines such as triglycidyl isocyanurate, glycidyl hydantoin, tetraglycidyl diaminodiphenylmethane, triglycidyl para-aminophenol, triglycidyl meta-aminophenol, diglycidyl aniline, diglycidyl toluidine, tetraglycidyl meta-xylenediamine, diglycidyl tribromoaniline, and tetraglycidyl bisaminomethylcyclohexane; and alicyclic or aliphatic epoxides such as 3,4-epoxycyclohexylmethyl carboxylate, epoxidized polybutadiene, and epoxidized soybean oil.

Examples of the treatment with the adhesive composition containing a sorbitol polyglycidyl ether and a blocked isocyanate include treatment performed to attach the components in RFL, and treatment optionally including subsequent heating.

For example, the attachment may be carried out by any method such as application with a roller, spraying through a nozzle, or immersion in a bath liquid (adhesive composition). In view of uniform attachment and removal of the excessive adhesive, attachment by immersion is preferred.

Moreover, to control the amount attached to the cord, other means may be further used such as squeezing with a pressure roller, scraping off with a scraper or the like, blowing off with air, suction, beating with a beater, etc.

The amount attached to the cord is preferably 1.0% by mass or more, more preferably 1.5% by mass or more, while it is preferably 3.0% by mass or less, more preferably 2.5% by mass or less.

Here, the amount attached to the cord refers to the amount of the solids in the RFL adhesive attached per 100 parts by mass of the cord.

The total solid concentration of the adhesive composition containing a sorbitol polyglycidyl ether and a blocked isocyanate is preferably 0.9% by mass or higher, more preferably 14% by mass or higher, while it is preferably 29% by mass or lower, more preferably 23% by mass or lower.

Resorcinol, formaldehyde, and a rubber latex, as well as other additives such as a vulcanization regulator, zinc oxide, an antioxidant, and a defoamer may be added to the adhesive composition containing a sorbitol polyglycidyl ether and a blocked isocyanate.

For example, heating may be performed by drying the reinforcing material (organic fiber cord) 16 with a RFL adhesive composition attached thereto at 100 to 250°C for one to five minutes and then heating the resulting material at 150 to 250°C for one to five minutes. The heating conditions after the drying are desirably at 180 to 240°C for one to two minutes.

The adhesive composition containing a halohydrin compound, a blocked isocyanate compound, and a rubber latex may be any composition containing these components. It is desirably an adhesive composition that contains a halohydrin compound, a blocked isocyanate compound, and a rubber latex and does not contain resorcinol and formaldehyde.

Examples of the halohydrin compound include compounds produced by reacting a polyol compound and an epihalohydrin compound (halohydrin ether).

The polyol compound refers to a compound having two or more hydroxyl groups in the molecule. Examples include glycols such as ethylene glycol, propylene glycol, polyethylene glycol, and polypropylene glycol, hydroxylic acids such as erythritol, xylitol, sorbitol, and tartaric acid, glyceric acid, glycerol, diglycerol, polyglycerol, trimethylolpropane, trimethylolethane, and pentaerythritol.

Examples of the epihalohydrin compound include epichlorohydrin and epibromohydrin.

Examples of the halohydrin compound include fluoroalcohol compounds, chlorohydrin compounds, bromohydrin compounds, and iodohydrin compounds. Halogenated sorbitols and halogenated glycerols are preferred among these.

The halogen content based on 100% by mass of the halohydrin compound is preferably 5.0 to 15.0% by mass, more preferably 7.0 to 13.0% by mass, still more preferably 9.0 to 12.0% by mass.

Examples of the blocked isocyanate compound include compounds as described above for the blocked isocyanate. Moreover, examples of the rubber latex include those as described above for the rubber latex.

The adhesive composition containing a halohydrin compound, a blocked isocyanate compound, and a rubber latex desirably contains 10.0 to 30.0 parts by mass of the halohydrin compound, 10.0 to 30.0 parts by mass of the blocked isocyanate compound, and 80.0 to 240.0 parts by mass of the rubber latex. Moreover, the adhesive composition desirably does not contain resorcinol and formaldehyde.

The adhesive layer formed of the adhesive composition containing a halohydrin compound, a blocked isocyanate compound, and a rubber latex is formed on the surface of the cord using the adhesive composition. For example, the adhesive layer may be formed by, but not limited to, immersion, brushing, casting, spraying, roll coating, or knife coating.

FIG. 3 shows an enlarged view of a tread portion 2.

A tire 1 is provided with a belt layer 7 embedded inside the tread portion 2, and a belt-reinforcing layer 15 including an organic fiber cord 16 which is located outward of the belt layer 7 in the tire radial direction. The tread portion 2 is partitioned by a main circumferential groove 20.

The thickness F from the outer surface of the belt-reinforcing layer cord with respect to the tire radial direction to the outer interface of the belt-reinforcing layer with respect to the tire radial direction in the belt-reinforcing layer 15 is preferably 0.04 mm or more, more preferably 0.05 mm or more, still more preferably 0.06 mm or more, while it is preferably 0.16 mm or less, more preferably 0.10 mm or less, still more preferably 0.09 mm or less, further preferably 0.08 mm or less. When the thickness F is within the range indicated above, the advantageous effect can be suitably achieved.

Here, the thickness F from the outer surface of the belt-reinforcing layer cord with respect to the tire radial direction to the outer interface of the belt-reinforcing layer with respect to the tire radial direction refers to the thickness of the coating rubber layer on the radially outer (with respect to the tire) side of the belt-reinforcing layer formed of an organic fiber cord coated with a coating rubber. Specifically, the thickness F is determined by measuring the distance (mm) on the equator from the outer interface of the belt-reinforcing layer with respect to the tire radial direction to the outer surface of the belt-reinforcing layer cord with respect to the tire radial direction in a cross-section of the tire taken along the radial direction, with the width between the bead portions being fixed to the normal rim width.

The product of the thickness F (mm) from the outer surface of the belt-reinforcing layer cord with respect to the tire radial direction to the outer interface of the belt-reinforcing layer with respect to the tire radial direction and the elastic modulus A (cN/(tex·%)) at a load of 2.0 cN/dtex at 100°C of the organic fiber cord 16 ($F \times A$) is desirably 0.28 or less.

The product ($F \times A$) is preferably 0.25 or less, more preferably 0.22 or less, still more preferably 0.18 or less, particularly preferably 0.16 or less, most preferably 0.14 or less. The lower limit of the product is not limited, but it is preferably 0.05 or more, more preferably 0.08 or more, still more preferably 0.10 or more, further preferably 0.13 or more. When the product is within the range indicated above, the advantageous effect can be suitably achieved. A similar range is desirable for the polyethylene terephthalate fiber cord.

The tread (tread rubber) in the tread portion 2 desirably has a thickness T of 18.0 mm or less, preferably 15.0 mm or less, more preferably 12.0 mm or less, still more preferably 11.0 mm or less, particularly preferably 10.5 mm or less. The lower limit of the thickness T is preferably 5.0 mm or more, more preferably 7.0 mm or more, still more preferably 8.0 mm or more. When the thickness T is within the range indicated above, the advantageous effect can be suitably achieved.

Here, the thickness T of the tread refers to the thickness of the tread measured on the equator in a radial cross-section of the tire. Specifically, the thickness T corresponds to the distance from the tread surface to the belt-reinforcing layer measured on the equator in a cross-section cut along a plane including the axis of rotation of the tire. Here, when the tread has a groove on the tire equator, it is the linear distance from the intersection of the equator and a straight line connecting the edges of the groove which are outermost in the tire radial direction.

The product of the thickness T (mm) of the tread and the elastic modulus A (cN/(tex·%)) at a load of 2.0 cN/dtex at 100°C of the organic fiber cord 16 ($T \times A$) is desirably 45 or less.

The product ($T \times A$) is preferably 42 or less, more preferably 40 or less, still more preferably 35 or less, further preferably 34 or less, further preferably 33 or less, further preferably 30 or less, further preferably 27 or less, particularly preferably 26 or less. The lower limit of the product is not limited, but it is preferably 10 or more, more preferably 15 or more, still more preferably 18 or more. When the product is within the range indicated above, the advantageous effect can be suitably achieved. A similar range is desirable for the polyethylene terephthalate fiber cord.

The mechanism by which the advantageous effect can be better achieved by adjusting the product of the thickness T (mm) of the tread $\times$ the elastic modulus A at a load of 2.0 cN/dtex ($T \times A$) to a predetermined value or less, particularly 35 or less, is not clear, but it is considered as follows. It is considered that reducing the thickness of the tread can facilitate suppression of heat build-up and heat accumulation in the tread portion to reduce changes in tread shape due to an increase in the internal pressure of the tire. It is also considered that this can reduce the centrifugal force applied to the tread portion, resulting in less shape change. Therefore, it is believed that adjusting the product of the thickness T of the tread and the elastic modulus A of the belt-reinforcing layer cord to a predetermined value or less can improve the contact performance of the tread portion while reducing changes in the shape of the tread portion, thereby improving overall performance in terms of durability during high-speed driving and ride quality.

The distance between the belt layer 7 and the belt-reinforcing layer 15 in the tire 1 is preferably 0.20 mm or more, more preferably 0.21 mm or more, still more preferably 0.24 mm or more, further preferably 0.25 mm or more, further preferably 0.26 mm or more, while it is preferably 0.45 mm or less, more preferably 0.42 mm or less, still more preferably 0.40 mm or less, further preferably 0.27 mm or less. When the distance is within the range indicated above, the advantageous effect can be suitably achieved.

In the present invention, the distance between the belt layer and the belt-reinforcing layer refers to the direct distance from the outer surface of the cord in the belt layer with respect to the tire radial direction to the inner surface of the cord in the belt-reinforcing layer with respect to the tire radial direction. The distance corresponds to the direct distance from the radially outer (with respect to the tire) surface of the cord in the belt layer adjacent to the belt-reinforcing layer to the radially inner (with respect to the tire) surface of the cord in the belt-reinforcing layer as measured on the tire equator in a cross-section of the tire taken along the radial direction, with the width between the bead portions being fixed to the normal rim width.

The mechanism by which the advantageous effect can be better achieved by adjusting the distance between the belt layer and the belt-reinforcing layer within a predetermined range, particularly 0.25 to 0.40 mm, is not clear, but it is believed that such a distance can ensure the gauge to improve durability during high-speed driving, thereby improving overall performance in terms of durability during high-speed driving and ride quality.

The thickness B of the coating layer of the belt layer is preferably 0.15 mm or more, more preferably 0.20 mm or more, still more preferably 0.22 mm or more, while it is preferably 0.50 mm or less, more preferably 0.40 mm or less, still more preferably 0.35 mm or less, further preferably 0.27 mm or less, further preferably 0.25 mm or less. When the thickness B is within the range indicated above, the advantageous effect can be suitably achieved.

Here, the thickness B of the coating layer of the belt layer is the thickness of the coating layer on one side of the belt layer. Specifically, it is determined by measuring the thickness (mm) of the coating layer extending from the outer interface of the belt layer with respect to the tire radial direction to the cord in the belt layer as measured on the equator in a cross-section of the tire taken along the radial direction, with the width between the bead portions being fixed to the normal rim width. Here, when the tire includes two or more belt layers, the thickness of the coating layer of the belt layer may be determined by measuring the distance in the tire radial direction between the cords of each adjacent belt layer and halving the measured distance.

In the tire 1, the distance L (mm) from the tread groove bottom 21 to the belt-reinforcing layer 15 is desirably 1.0 mm or more.

L is preferably 1.5 mm or more, more preferably 2.0 mm or more, still more preferably 2.2 mm or more, particularly preferably 2.5 mm or more. The upper limit of L is preferably 5.0 mm or less, more preferably 4.5 mm or less, still more preferably 4.0 mm or less, further preferably 3.0 mm or less. When L is within the range indicated above, the advantageous effect can be suitably achieved.

The product of the distance L (mm) from the tread groove bottom 21 to the belt-reinforcing layer 15 and the elastic modulus A (cN/(tex·%)) at a load of 2.0 cN/dtex at 100°C of the organic fiber cord 16 (L × A) is desirably 13.5 or less.

The product (L × A) is preferably 12.6 or less, more preferably 12.0 or less, still more preferably 11.3 or less, further preferably 10.0 or less. The lower limit of the product is not limited, but it is preferably 4.0 or more, more preferably 6.3 or more, still more preferably 6.5 or more, further preferably 7.2 or more, further preferably 7.5 or more, further preferably 8.1 or more, further preferably 8.4 or more, further preferably 8.5 or more, further preferably 8.8 or more. When the product is within the range indicated above, the advantageous effect can be suitably achieved. A similar range is desirable for the polyethylene terephthalate fiber cord.

In the present invention, the tread groove bottom 21 refers to the deepest part of the main circumferential groove which corresponds to the innermost surface of the main circumferential groove with respect to the tire radial direction.

In the present invention, the distance L (mm) from the tread groove bottom 21 to the belt-reinforcing layer 15 refers to the distance from the tread groove bottom 21 to the outer surface 23 of the belt-reinforcing layer 15 with respect to the tire radial direction. The distance L corresponds to the distance from the bottom of the main circumferential groove closest to the tire equator to the outer surface of the belt-reinforcing layer 15 with respect to the tire radial direction in a cross-section of the tire taken along the radial direction, with the width between the bead portions being fixed to the normal rim width. It is measured along the normal of the outer surface of the belt-reinforcing layer 15 with respect to the tire radial direction.

Herein, the dimensions (dimensions such as the thicknesses of the belt layer and the belt-reinforcing layer, and the distance between the belt layer and the belt-reinforcing layer) and angles of the tire are measured in a cross-section of the tire taken along the radial direction, unless otherwise stated. In the measurement, the width between the bead portions of the tire is fixed to the normal rim width. Moreover, when the angle of the cord in the belt layer 7 or belt-reinforcing layer 15 with respect to the tire circumferential direction, the filament angle of the organic fiber cord 16 in the belt-reinforcing layer 15, etc. are measured, they may be determined by separating the tread portion from the cross-section and observing the separated part from the tire radial direction.

In the belt-reinforcing layer 15, the belt-reinforcing layer coating rubber composition (reinforcement rubber 17) coating the organic fiber cord 16 contains one or more rubber components.

The rubber components in the belt-reinforcing layer coating rubber composition contribute to crosslinking and generally correspond to polymer components which have a weight average molecular weight (Mw) of 10,000 or more and which are not extractable with acetone. The rubber components are solid at room temperature (25°C).

The weight average molecular weight of the rubber components is preferably 50,000 or more, more preferably 150,000 or more, still more preferably 200,000 or more, while it is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

Examples of rubber components that may be used in the belt-reinforcing layer coating rubber composition include diene rubbers. Examples of diene rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combinations of two or more. To better achieve the advantageous effect, isoprene-based rubbers, BR, and SBR are preferred among these, with isoprene-based rubbers being more preferred. These rubber components may also be subjected to the below-described modification or hydrogenation process. Rubbers extended with oils, resins, liquid rubber components, etc. are also usable.

The diene rubbers may be either unmodified or modified diene rubbers.

The modified diene rubbers may be any diene rubber having a functional group interactive with filler such as silica. Examples include a chain end-modified diene rubber obtained by modifying at least one chain end of a diene rubber with a compound (modifier) having the above functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxy, nitrile, pyridyl, alkoxy, hydroxy, oxy, and epoxy groups. Here, these functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of isoprene-based rubbers include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more.

The amount of isoprene-based rubbers based on 100% by mass of the rubber components in the belt-reinforcing layer coating rubber composition is preferably 5% by mass or more, more preferably 50% by mass or more, still more preferably 75% by mass or more, particularly preferably 85% by mass or more, and may be 100% by mass. When the amount is within the range indicated above, the advantageous effect tends to be better achieved.

Any BR may be used, and examples include high-cis BR having high cis content, BR containing syndiotactic polybutadiene crystals, and BR synthesized using rare earth catalysts (rare earth-catalyzed BR). These may be used alone or in combinations of two or more. In particular, the BR preferably includes high-cis BR having a cis content of 90% by mass or higher. The cis content is more preferably 95% by mass or higher. Here, the cis content can be measured by infrared absorption spectrometry.

When one type of BR is used, the cis content refers to the cis content of the BR, while when multiple types of BR are used, the cis content refers to the average cis content.

The average cis content of the BR can be calculated using the equation: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

Moreover, the BR may be either unmodified or modified BR. Examples of the modified BR include those into which functional groups as listed for the modified diene rubbers have been introduced. The BR may also be hydrogenated polybutadiene polymers (hydrogenated BR).

Usable commercial BR products are available from Ube Industries, Ltd., JSR Corporation, Asahi Kasei Corporation, Zeon Corporation, etc.

When the belt-reinforcing layer coating rubber composition contains BR, the amount of BR based on 100% by mass of the rubber components is preferably 5% by mass or more, more preferably 10% by mass or more, still more preferably 15% by mass or more. The upper limit of the amount is preferably 50% by mass or less, more preferably 30% by mass or less, still more preferably 20% by mass or less. When the amount is within the range indicated above, the advantageous effect tends to be better achieved.

Any SBR may be used, and examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 20% by mass or higher, still more preferably 25% by mass or higher. The styrene content is preferably 45% by mass or lower, more preferably 40% by mass or lower, still more preferably 35% by mass or lower. When the styrene content is within the range indicated above, handling stability during high-speed driving tends to be improved.

Herein, the styrene content can be measured by $^1$H-NMR analysis.

When one type of SBR is used, the styrene content refers to the styrene content of the SBR, while when multiple types of SBR are used, the styrene content refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)).

The vinyl bond content of the SBR is preferably 3% by mass or higher, more preferably 5% by mass or higher, still more preferably 7% by mass or higher. The vinyl bond content is preferably 25% by mass or lower, more preferably 15% by mass or lower, still more preferably 13% by mass or lower. When the vinyl bond content is within the range indicated above, handling stability during high-speed driving tends to be improved.

Herein, the vinyl bond content (1,2-butadiene unit content) can be measured by infrared absorption spectrometry.

The vinyl bond content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl bond content refers to the vinyl bond content of the SBR, while when multiple types of SBR are used, the vinyl bond content refers to the average vinyl bond content.

The average vinyl bond content of the SBR can be calculated using the equation: Σ{amount of each SBR × (100 (% by mass) - styrene content (% by mass) of the each SBR) × vinyl bond content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl bond content of 30% by mass, 15 parts by mass of SBR having a styrene content of 25% by mass and a vinyl bond content of 20% by mass, and the remaining 10 parts by mass of a rubber component other than SBR, the average vinyl bond content of the SBR is 28% by mass (= {75 × (100 (% by mass) - 40 (% by mass)) × 30 (% by mass) + 15 × (100 (% by mass) - 25 (% by mass)) × 20 (% by mass) }/{75 × (100 (% by mass) - 40 (% by mass)) + 15 × (100 (% by mass) - 25 (% by mass))}).

The SBR may be either unmodified or modified SBR. Examples of the modified SBR include those into which functional groups as listed for the modified diene rubbers have been introduced. The SBR may also be hydrogenated styrene-butadiene copolymers (hydrogenated SBR).

SBR products manufactured or sold by Sumitomo Chemical Co., Ltd., JSR Corporation, Asahi Kasei Corporation, Zeon Corporation, etc. may be used as the SBR.

When the belt-reinforcing layer coating rubber composition contains SBR, the amount of SBR based on 100% by mass of the rubber components is preferably 5% by mass or more, more preferably 10% by mass or more, still more preferably 15% by mass or more. The upper limit of the amount is preferably 50% by mass or less, more preferably 30% by mass or less, still more preferably 20% by mass or less. When the amount is within the range indicated above, the advantageous effect tends to be better achieved.

The belt-reinforcing layer coating rubber composition may contain a filler.

Any filler may be used, including materials known in the rubber field. Examples include inorganic fillers such as carbon black, silica, calcium carbonate, talc, alumina, clay, aluminum hydroxide, aluminum oxide, and mica; and hard-to-disperse fillers.

The total amount of fillers (the total amount of fillers such as silica and carbon black) per 100 parts by mass of the rubber components in the belt-reinforcing layer coating rubber composition is preferably 5 parts by mass or more, more preferably 20 parts by mass or more, still more preferably 40 parts by mass or more, particularly preferably 50 parts by mass or more. The upper limit of the total amount is preferably 120 parts by mass or less, more preferably 100 parts by mass or less, still more preferably 80 parts by mass or less. When the total amount is within the range indicated above, the advantageous effect tends to be better achieved.

Carbon-derived fillers (carbon-containing fillers), such as carbon black, and silica are preferred among the fillers.

Any carbon black may be used in the belt-reinforcing layer coating rubber composition, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more. In addition to the conventional carbon black made from mineral oils, etc., carbon black made from biomass materials such as lignin is also usable.

The nitrogen adsorption specific surface area ($N_2SA$) of the carbon black is preferably 30 $m^2/g$ or more, more preferably 50 $m^2/g$ or more, still more preferably 70 $m^2/g$ or more. The $N_2SA$ is also preferably 200 $m^2/g$ or less, more preferably 150 $m^2/g$ or less, still more preferably 130 $m^2/g$ or less, particularly preferably 120 $m^2/g$ or less. When the $N_2SA$ is within the range indicated above, the advantageous effect tends to be better achieved.

Here, the nitrogen adsorption specific surface area of the carbon black can be determined in accordance with JIS K 6217-2:2001.

When the belt-reinforcing layer coating rubber composition contains carbon black, the amount of carbon black per 100 parts by mass of the rubber components is preferably 5 parts by mass or more, more preferably 20 parts by mass or more, still more preferably 40 parts by mass or more, particularly preferably 50 parts by mass or more. The upper limit of the amount is preferably 120 parts by mass or less, more preferably 100 parts by mass or less, still more preferably 80 parts by mass or less. When the amount is within the range indicated above, the advantageous effect tends to be better achieved.

Examples of usable silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more. In addition to the above-mentioned types of silica, silica made from biomass materials such as rice husks is also usable.

The nitrogen adsorption specific surface area ($N_2SA$) of the silica is preferably 50 $m^2/g$ or more, more preferably 100 $m^2/g$ or more, still more preferably 150 $m^2/g$ or more, particularly preferably 180 $m^2/g$ or more, most preferably 190 $m^2/g$ or more. Moreover, the upper limit of the $N_2SA$ of the silica is not limited, but it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by a BET method in accordance with ASTM D3037-93.

When the belt-reinforcing layer coating rubber composition contains silica, the amount of silica per 100 parts by mass of the rubber components is preferably 5 parts by mass or more, more preferably 20 parts by mass or more, still more preferably 40 parts by mass or more, particularly preferably 50 parts by mass or more. The upper limit of the amount is preferably 120 parts by mass or less, more preferably 100 parts by mass or less, still more preferably 80 parts by mass or less. When the amount is within the range indicated above, the advantageous effect tends to be better achieved.

When the belt-reinforcing layer coating rubber composition contains silica, it preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica in the belt-reinforcing layer coating rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

Examples of hard-to-disperse fillers include microfibrillated plant fibers, short fibrous cellulose, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. These microfibrillated plant fibers may be used alone or in combinations of two or more.

Herein, the term "cellulose microfibrils" typically refers to cellulose fibers having an average fiber diameter of not more than 10 μm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

The amount of hard-to-disperse fillers per 100 parts by mass of the rubber components in the belt-reinforcing layer coating rubber composition is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The belt-reinforcing layer coating rubber composition may contain a plasticizer.

The term "plasticizer" refers to a material that can impart plasticity to rubber components. Examples include liquid plasticizers (plasticizers which are liquid at room temperature (25°C)) and resins (resins which are solid at room temperature (25°C)).

The amount of plasticizers (the total amount of plasticizers) per 100 parts by mass of the rubber components in the belt-reinforcing layer coating rubber composition is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved. It should be noted that when the above-mentioned extended rubbers are used, the amount of the extender components used in the extended rubbers are included in the amount of plasticizers.

Any liquid plasticizer (plasticizer which is liquid at room temperature (25°C)) may be used in the belt-reinforcing layer coating rubber composition, and examples include oils and liquid polymers (liquid resins, liquid diene polymers, etc.). These may be used alone or in combinations of two or more.

The amount of liquid plasticizers per 100 parts by mass of the rubber components in the belt-reinforcing layer coating rubber composition is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved. Here, a similar range is also suitable for the amount of oils.

Examples of oils include process oils, plant oils, and mixtures thereof. Examples of process oils include paraffinic process oils, aromatic process oils, and naphthenic process oils, such as mild extract solvates (MES), distillate aromatic extracts (DAE), treated distillate aromatic extracts (TDAE), treated residual aromatic extracts (TRAE), and residual aromatic extracts (RAE). Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these. From the standpoint of life cycle assessment, oils obtained by purifying lubricating oils used in rubber mixing machines, engines, or other applications, or waste cooking oils used in cooking establishments may also be used as the oils.

Examples of liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of the foregoing resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at the chain end or backbone with a polar group. Hydrogenated products of these polymers are also usable.

Examples of the resins (resins which are solid at room temperature (25°C)) usable in the belt-reinforcing layer coating rubber composition include aromatic vinyl polymers, coumarone-indene resins, coumarone resins, indene resins, phenol resins, rosin resins, petroleum resins, terpene resins, and acrylic resins, all of which are solid at room temperature (25°C). These resins may also be hydrogenated. These may be used alone or in combinations of two or more. Aromatic vinyl polymers, petroleum resins, and terpene resins are preferred among these.

When the belt-reinforcing layer coating rubber composition contains the above-mentioned resins, the amount of the above-mentioned resins per 100 parts by mass of the rubber components is preferably 100 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved.

The softening point of the above-mentioned resins is preferably 60°C or higher, more preferably 70°C or higher, still more preferably 80°C or higher. The upper limit of the softening point is preferably 160°C or lower, more preferably 130°C or lower, still more preferably 115°C or lower. When the softening point is within the range indicated above, handling stability during high-speed driving tends to be improved.

Here, the softening point of the above-mentioned resins is determined as set forth in JIS K 6220-1:2001 using a ring and ball softening point measuring apparatus and defined as the temperature at which the ball drops down. The softening point of the resins indicated above is usually higher by 50°C ± 5°C than the glass transition temperature of the resins.

The aromatic vinyl polymers refer to polymers containing aromatic vinyl monomers as structural units. Examples include resins produced by polymerization of $\alpha$-methylstyrene and/or styrene. Specific examples include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of the foregoing resins. DCPD resins or hydrogenated DCPD resins are preferred among these.

The terpene resins refer to polymers containing terpenes as structural units. Examples include polyterpene resins produced by polymerization of terpene compounds, and aromatic modified terpene resins produced by polymerization of terpene compounds and aromatic compounds. Hydrogenated products of these resins are also usable.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene backbone and is classified as a monoterpene ($C_{10}H_{16}$), sesquiterpene ($C_{15}H_{24}$), diterpene ($C_{20}H_{32}$), or other terpenes. Examples of the terpene compounds include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, $\alpha$-pinene and $\beta$-pinene, are classified into $\beta$-pinene resins mainly containing $\beta$-pinene and $\alpha$-pinene resins mainly containing $\alpha$-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol, and examples of the styrene compounds include styrene and $\alpha$-methylstyrene.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45, all of which are hereby incorporated by reference in their entirety) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The belt-reinforcing layer coating rubber composition preferably contains an antioxidant from the standpoint of properties such as cracking resistance and ozone resistance.

Non-limiting examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate] methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber components in the belt-reinforcing layer coating rubber composition is preferably 0.2 parts by mass or more, more preferably 0.5 parts by mass or more, still more preferably 2.0 parts by mass or more. The amount is preferably 7.0 parts by mass or less, more preferably 4.0 parts by mass or less.

The belt-reinforcing layer coating rubber composition preferably contains stearic acid.

The amount of stearic acid per 100 parts by mass of the rubber components in the belt-reinforcing layer coating rubber composition is preferably 0.5 to 10 parts by mass, more preferably 0.5 to 4 parts by mass.

Here, conventionally known stearic acid may be used, including, for example, those available from NOF Corporation, Kao Corporation, FUJIFILM Wako Pure Chemical Corporation, Chiba Fatty Acid Co., Ltd., etc.

The belt-reinforcing layer coating rubber composition preferably contains zinc oxide.

The amount of zinc oxide per 100 parts by mass of the rubber components in the belt-reinforcing layer coating rubber composition is preferably 0.5 to 10 parts by mass, more preferably 1 to 3 parts by mass.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The belt-reinforcing layer coating rubber composition may contain a wax.

The amount of waxes per 100 parts by mass of the rubber components in the belt-reinforcing layer coating rubber composition is preferably 0.5 to 10 parts by mass, more preferably 1 to 5 parts by mass.

Any wax may be used, and examples include petroleum waxes, natural waxes, and synthetic waxes produced by purifying or chemically treating a plurality of waxes. These waxes may be used alone or in combinations of two or more.

Examples of petroleum waxes include paraffin waxes and microcrystalline waxes. Any natural wax derived from non-petroleum resources is usable. Examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Usable commercial products are available from, for example, Ouchi Shinko Chemical Industrial Co., Ltd., Nippon Seiro Co., Ltd., Seiko Chemical Co., Ltd., etc.

The belt-reinforcing layer coating rubber composition preferably contains sulfur to moderately form crosslinks between the polymer chains, thereby imparting good properties.

The amount of sulfur per 100 parts by mass of the rubber components in the belt-reinforcing layer coating rubber composition is preferably 0.1 parts by mass or more, more preferably 1.0 parts by mass or more, still more preferably 1.7 parts by mass or more. The amount is preferably 5.0 parts by mass or less, more preferably 3.0 parts by mass or less, still more preferably 2.0 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The belt-reinforcing layer coating rubber composition preferably contains a vulcanization accelerator.

The amount of vulcanization accelerators in the belt-reinforcing layer coating rubber composition is not limited and may be freely determined according to the desired curing rate and crosslink density. The amount of vulcanization accelerators per 100 parts by mass of the rubber components is preferably 0.5 parts by mass or more, more preferably 2.0 parts by mass or more, still more preferably 2.7 parts by mass or more. The upper limit of the amount is preferably 8.0 parts by mass or less, more preferably 6.0 parts by mass or less, still more preferably 5.0 parts by mass or less.

Any type of vulcanization accelerator may be used, including those generally used. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide, guanidine, and benzothiazole vulcanization accelerators are preferred among these.

In addition to the above-mentioned components, the belt-reinforcing layer coating rubber composition may appropriately contain compounding agents commonly used in the tire industry such as releasing agents or other materials.

Materials as described for the reinforcement rubber 17 (belt-reinforcing layer coating rubber composition) may also be used in the belt layer coating rubber (the topping rubber 10 coating the belt cord 9) or other tire components while appropriately changing the amounts of the materials.

Moreover, the reinforcement rubber 17 (belt-reinforcing layer coating rubber composition) may be the same as or different from the rubber composition of the topping rubber 10, for example.

The belt-reinforcing layer coating rubber composition may be prepared by known methods. For example, it may be prepared by kneading the components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120 to 200°C, preferably 140 to 180°C.

The belt-reinforcing layer 15 that includes the organic fiber cord 16 and the reinforcement rubber 17 (belt-reinforcing layer coating rubber composition) coating the organic fiber cord 16 may be applied to a tire such as a pneumatic tire or a non-pneumatic tire, preferably a pneumatic tire. In particular, the tire may be suitably used as a summer tire or winter tire (e.g., studless winter tire, cold weather tire, snow tire, studded tire). The tire may be used as a tire for passenger cars, large passenger cars, large SUVs, heavy duty vehicles such as trucks and buses, light trucks, or motorcycles, or as a racing tire (high performance tire), etc.

The tire can be produced from the organic fiber cord 16 and the reinforcement rubber 17 (belt-reinforcing layer coating rubber composition) coating the organic fiber cord 16 by usual methods. For example, an organic fiber cord 16 and a reinforcement rubber 17 (belt-reinforcing layer coating rubber composition) coating the organic fiber cord 16, before vulcanization, may be combined and extruded into the shape of a belt-reinforcing layer 15, and then formed together with other tire components on a tire building machine in a usual manner to build an unvulcanized tire. The unvulcanized tire may be heated and pressurized in a vulcanizer to produce a tire.

Particularly preferred embodiments of the present invention are described in detail above.

EXAMPLES

Examples (working examples) which are considered preferable to implement the present invention are described below.

Prototypes of 195/65R15 pneumatic passenger car tires (test tires) having the basic structure shown in FIG. 1 are produced according to the specifications (the cord material and physical properties of the organic fiber cord in the belt-reinforcing layer, the thicknesses and distances of the belt layer and the belt-reinforcing layer, the thickness of the tread, etc.) indicated in the table.

The common specifications of the test tires are as follows.

Belt ply: two pieces
Angle of belt cord with respect to tire circumferential direction: 20 degrees (crossed)
Belt cord type: single wire
Number of ends of belt cord: 36
Belt cord diameter: 0.32 mm

The test tires prepared according to the specifications varied as shown in Table 1 were simulated, and the results calculated according to the below-described evaluations are shown in Table 1.
Here, the reference comparative examples for durability during high-speed driving and ride quality are Comparative Examples 4 and 8, respectively.

<Durability during high-speed driving>

Each test tire is mounted on a drum tester. The rotational speed is gradually increased from 100 km/hr, and the speed at which fracture occurs is measured and expressed as an index (high-speed durability index) relative to that of the reference comparative example taken as 100. A higher index indicates a higher speed at which fracture occurs and better durability during high-speed driving.

<Ride quality>

Each set of test tires are mounted on 15x6JJ aluminum wheel rims and inflated to an internal pressure of 250 kPa (the same pressure for the front and rear tires). Then, they are mounted on the four wheels of a front-engine, front-wheel-drive car of 2000 displacement made in Japan, and the car is driven on a test course with one driver in the car and then subjectively evaluated on a scale of one to five. The same test is carried out by twenty drivers, and the sum of the scores is evaluated as an index relative to that of the reference comparative example taken as 100. A higher index indicates better ride quality.

<Overall performance>

The overall performance in terms of durability during high-speed driving and ride quality is evaluated based on the sum of the two indices obtained in the evaluation of durability during high-speed driving and the evaluation of ride quality. A larger value indicates better overall performance.

[Table 1]

Belt-reinforcing layer

| | | Comparative Example | | | | | | | |
|---|---|---|---|---|---|---|---|---|---|
| | | 1 | 2 | 3 | 4 | 5 | 6 | 7 | 8 |
| Specifications of organic fiber cord and tire | Material of organic fiber cord | Nylon | PET | PET | PET | Nylon | PET | PET | Nylon |
| | Elastic modulus A at load of 2.0 cN/dtex at 100°C (cN/(tex·%)) | 3.0 | 5.0 | 4.0 | 4.5 | 4.0 | 4.8 | 4.5 | 3.0 |
| | Elongation at specific load of 2.0 cN/dtex at 100°C (%) | 10.0 | 5.8 | 7.3 | 6.5 | 10.5 | 6.2 | 6.3 | 10.0 |
| | Twist number (turns/10 cm) | 25 | 25 | 40 | 40 | 25 | 35 | 25 | 25 |
| | Total fineness (dtex) | 2800 | 2200 | 2200 | 3800 | 3800 | 2200 | 2200 | 2800 |
| | Twist factor K | 1323 | 1173 | 1876 | 2466 | 1541 | 1642 | 1173 | 1323 |
| | Load G at 3% elongation (N) | 22 | 50 | 30 | 48 | 28 | 50 | 45 | 22 |
| | Number E of cords per 50 mm width (ends/50 mm) | 49 | 49 | 49 | 49 | 49 | 49 | 49 | 49 |
| | G × E | 1078 | 2450 | 1470 | 2352 | 1372 | 2450 | 2205 | 1078 |
| | Degree of elongation of organic fiber cord within belt-reinforcing layer (%) | 3.2 | 2.8 | 2.5 | 2.6 | 3.2 | 2.8 | 2.6 | 3.2 |
| | Modulus of load-elongation curve at 100°C at specified degree of elongation (%) (cN/(tex·%)) | 1.5 | 6.0 | 4.5 | 5.2 | 2.5 | 5.4 | 5.5 | 1.5 |
| | Distance between belt layer and belt-reinforcing layer (mm) | 0.22 | 0.12 | 0.17 | 0.15 | 0.22 | 0.25 | 0.17 | 0.22 |
| | Filament angle (degrees) | 10 | 8 | 12 | 16 | 14 | 14 | 45 | 10 |
| | Thickness F from outer surface of belt-reinforcing layer cord with respect to tire radial direction to outer interface of belt-reinforcing layer with respect to tire radial direction (mm) | 0.05 | 0.05 | 0.05 | 0.05 | 0.05 | 0.15 | 0.05 | 0.05 |
| | F × A | 0.15 | 0.25 | 0.20 | 0.23 | 0.20 | 0.72 | 0.23 | 0.15 |
| | Thickness B of coating layer of belt layer (mm) | 0.22 | 0.22 | 0.22 | 0.22 | 0.22 | 0.22 | 0.22 | 0.22 |
| | Thickness T of tread (mm) | 15.0 | 15.0 | 15.0 | 15.0 | 15.0 | 15.0 | 15.0 | 10.5 |
| | T × A | 45 | 75 | 60 | 68 | 60 | 72 | 68 | 32 |
| | Distance L from tread groove bottom to belt-reinforcing layer (mm) | 4.0 | 4.0 | 4.0 | 4.0 | 4.0 | 4.0 | 4.0 | 4.0 |
| | L × A | 12.0 | 20.0 | 16.0 | 18.0 | 16.0 | 19.2 | 18.0 | 12.0 |
| Evaluation | (a) Durability during high-speed driving | 84 | 74 | 84 | 100 | 94 | 100 | 88 | 88 |
| | (b) Ride quality | 94 | 82 | 82 | 70 | 94 | 82 | 88 | 100 |
| | Overall performance (= (a) + (b)) | 178 | 156 | 166 | 170 | 188 | 182 | 176 | 188 |

EP 4 335 661 B1

21

Belt-reinforcing layer

| | | Example | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Specifications of organic fiber cord and tire | Material of organic fiber cord | PET | PET | PET | PET | PET | PET | PET | PET | PET | PET | PET | PET | PET | PET | PET |
| | Elastic modulus A at load of 2.0 cN/dtex at 100°C (cN/(tex·%)) | 1.8 | 3.0 | 2.2 | 2.2 | 2.8 | 2.8 | 2.5 | 2.5 | 1.8 | 1.8 | 1.8 | 1.8 | 1.8 | 1.8 | 3.4 |
| | Elongation at specific load of 2.0 cN/dtex at 100°C (%) | 9.7 | 8.5 | 9.1 | 9.1 | 8.2 | 8.2 | 8.8 | 8.8 | 13.2 | 9.7 | 9.7 | 9.7 | 9.7 | 13.6 | 8.1 |
| | Twist number (turns/10 cm) | 48 | 35 | 65 | 65 | 55 | 55 | 50 | 50 | 48 | 65 | 34 | 48 | 48 | 48 | 34 |
| | Total fineness (dtex) | 2200 | 2200 | 2200 | 2200 | 2880 | 2880 | 2880 | 2880 | 2200 | 4400 | 4400 | 2200 | 2200 | 2200 | 2880 |
| | Twist factor K | 2251 | 1642 | 3049 | 3049 | 2952 | 2952 | 2683 | 2683 | 2251 | 4312 | 2255 | 2251 | 2251 | 2251 | 1825 |
| | Load G at 3% elongation (N) | 15 | 38 | 18 | 18 | 35 | 35 | 30 | 30 | 15 | 35 | 55 | 15 | 15 | 15 | 42 |
| | Number E of cords per 50 mm width (ends/50 mm) | 49 | 49 | 49 | 65 | 45 | 45 | 45 | 45 | 49 | 49 | 49 | 49 | 49 | 49 | 49 |
| | G × E | 735 | 1862 | 882 | 1170 | 1575 | 1575 | 1350 | 1350 | 735 | 1715 | 2695 | 735 | 735 | 735 | 2058 |
| | Degree of elongation of organic fiber cord within belt-reinforcing layer (%) | 1.5 | 2.0 | 2.4 | 2.4 | 2.8 | 2.8 | 2.8 | 2.8 | 1.5 | 1.5 | 1.8 | 5.2 | 1.5 | 1.5 | 2.4 |
| | Modulus of load-elongation curve at 100°C at specified degree of elongation (%) (cN/(tex·%)) | 3.5 | 1.6 | 1.6 | 1.6 | 4.5 | 4.5 | 4.0 | 4.0 | 3.5 | 3.5 | 3.5 | 4.0 | 3.5 | 3.5 | 5.3 |
| | Distance between belt layer and belt-reinforcing layer (mm) | 0.24 | 0.21 | 0.24 | 0.24 | 0.24 | 0.27 | 0.26 | 0.26 | 0.24 | 0.24 | 0.24 | 0.24 | 0.42 | 0.24 | 0.18 |
| | Filament angle (degrees) | 16 | 11 | 15 | 15 | 14 | 14 | 45 | 45 | 16 | 16 | 16 | 16 | 16 | 16 | 13 |
| | Thickness F from outer surface of belt-reinforcing layer cord with respect to tire radial direction to outer interface of belt-reinforcing layer with respect to tire radial direction (mm) | 0.05 | 0.05 | 0.05 | 0.05 | 0.05 | 0.08 | 0.06 | 0.06 | 0.05 | 0.05 | 0.05 | 0.05 | 0.16 | 0.05 | 0.05 |
| | F × A | 0.08 | 0.14 | 0.10 | 0.10 | 0.13 | 0.22 | 0.14 | 0.14 | 0.08 | 0.08 | 0.08 | 0.08 | 0.28 | 0.08 | 0.17 |
| | Thickness B of coating layer of belt layer (mm) | 0.22 | 0.22 | 0.22 | 0.22 | 0.22 | 0.22 | 0.22 | 0.22 | 0.22 | 0.22 | 0.22 | 0.22 | 0.27 | 0.22 | 0.22 |
| | Thickness T of tread (mm) | 15.0 | 15.0 | 15.0 | 15.0 | 12.0 | 12.0 | 12.0 | 10.5 | 15.0 | 15.0 | 15.0 | 15.0 | 15.0 | 15.0 | 15.0 |
| | T × A | 27 | 45 | 33 | 33 | 34 | 34 | 30 | 26 | 27 | 27 | 27 | 27 | 27 | 27 | 51 |
| | Distance L from tread groove bottom to belt-reinforcing layer (mm) | 4.0 | 4.0 | 4.0 | 4.0 | 3.0 | 3.0 | 3.0 | 2.5 | 4.5 | 4.5 | 4.5 | 4.5 | 4.5 | 4.5 | 4.0 |
| | L × A | 7.2 | 12.0 | 8.8 | 8.8 | 8.4 | 8.4 | 7.5 | 6.3 | 8.1 | 8.1 | 8.1 | 8.1 | 8.1 | 8.1 | 13.6 |
| Evaluation | (a) Durability during high-speed driving | 90 | 106 | 96 | 100 | 116 | 126 | 122 | 126 | 88 | 102 | 100 | 100 | 80 | 86 | 110 |
| | (b) Ride quality | 116 | 98 | 122 | 122 | 122 | 122 | 128 | 134 | 116 | 102 | 102 | 104 | 120 | 113 | 88 |
| | Overall performance (= (a) + (b)) | 206 | 204 | 218 | 222 | 238 | 248 | 250 | 260 | 204 | 204 | 202 | 204 | 200 | 199 | 198 |

REFERENCE SIGNS LIST

1 tire
2 tread portion
4 bead portion
6 carcass
7 belt layer
8 belt ply
8A first belt ply
8B second belt ply
9 belt cord
10 topping rubber
15 belt-reinforcing layer
16 organic fiber cord
17 reinforcement rubber
20 main circumferential groove
21 tread groove bottom
23 outer surface of belt-reinforcing layer 15 with respect to tire radial direction
31 filament angle
32 longitudinal center line of cord
33 filament
W1 width in tire axial direction of first belt ply 8A
W2 width in tire axial direction of second belt ply 8B
W3 width of belt-reinforcing layer
TW tread width
Te tread edge
T thickness of tread
F thickness from outer surface of belt-reinforcing layer cord with respect to tire radial direction to outer interface of belt-reinforcing layer with respect to tire radial direction
C tire equator
B thickness of coating layer of belt layer
L distance from tread groove bottom to belt-reinforcing layer

**Claims**

1. A tire (1), comprising a belt layer (7) and a belt-reinforcing layer (15),

   the belt-reinforcing layer (15) comprising at least one organic fiber cord (16) including a polyethylene terephthalate fiber cord,
   **characterized in that** the organic fiber cord (16) has an elastic modulus A at a load of 2.0 cN/dtex at 100°C that is less than 3.5 cN/(tex·%).

2. The tire (1) according to claim 1,
   wherein the organic fiber cord (16) has an elongation at a specific load of 2.0 cN/dtex at 100°C that is 7.0 to 13.2%.

3. The tire (1) according to claim 1 or 2,
   wherein the organic fiber cord (16) has a twist factor K of 2100 to 4300.

4. The tire (1) according to any one of claims 1 to 3,
   wherein the organic fiber cord (16) has a product of G × E of 1000 to 2500, where G represents a load (N) at 3% elongation, and E represents a number of cords per 50 mm width (ends/50 mm) in a tire axial direction.

5. The tire (1) according to any one of claims 1 to 4,
   wherein the organic fiber cord (16) within the belt-reinforcing layer (15) has a degree of elongation of 2.0 to 5.0% and has a modulus of a load-elongation curve at 100°C at the degree of elongation (%) that is 1.0 to 5.0 cN/(tex·%).

**6.** The tire (1) according to any one of claims 1 to 5,

wherein the tire (1) further comprises a tread (2), and
has a product of T × A of 35 or less, where T represents a thickness (mm) of the tread (2), and A represents the elastic modulus (cN/(tex·%)) at a load of 2.0 cN/dtex at 100°C of the organic fiber cord (16).

**7.** The tire (1) according to any one of claims 1 to 6,
wherein a distance between the belt layer (7) and the belt-reinforcing layer (15) is 0.25 to 0.40 mm.

**8.** The tire (1) according to any one of claims 1 to 7,
wherein the organic fiber cord (16) has a filament angle (31) of 30 degrees or greater.

**9.** The tire (1) according to any one of claims 1 to 8,
wherein the tire (1) has a product of F × A of 0.16 or less, where F represents a thickness (mm) from an outer surface (23) of the belt-reinforcing layer (15) cord with respect to a tire radial direction to an outer interface of the belt-reinforcing layer (15) with respect to the tire radial direction, and A represents the elastic modulus (cN/(tex·%)) at a load of 2.0 cN/dtex at 100°C of the organic fiber cord (16).

**10.** The tire (1) according to any one of claims 1 to 9,
wherein the tire (1) has a product of L × A of 10.0 or less, where L represents a distance (mm) from a tread groove bottom (21) to the belt-reinforcing layer (15), and A represents the elastic modulus (cN/(tex·%)) at a load of 2.0 cN/dtex at 100°C of the organic fiber cord (16).

**11.** The tire (1) according to any one of claims 1 to 10,
wherein the organic fiber cord (16) has a twist number of 35 to 60 turns/10 cm.

**12.** The tire (1) according to any one of claims 1 to 11,
wherein the organic fiber cord (16) has a load G at 3% elongation of 18 to 45 N.

**13.** The tire (1) according to any one of claims 1 to 12,
wherein the organic fiber cord (16) has a total fineness of 2500 to 4000 dtex.

**14.** The tire (1) according to any one of claims 1 to 13,
wherein a number of ends per 50 mm width in a tire axial direction of the organic fiber cord (16) is 30 to 60/50 mm.

**15.** The tire (1) according to claim 6,
wherein the tread (2) has a thickness T of 5.0 to 12.0 mm.

**Patentansprüche**

**1.** Reifen (1), umfassend eine Gürtelschicht (7) und eine Gürtel-verstärkende Schicht (15),

wobei die Gürtel-verstärkende Schicht (15) mindestens einen organischen Faserkord (16) umfasst, der einen Polyethylenterephthalat-Faserkord enthält,
**dadurch gekennzeichnet, dass** der organische Faserkord (16) einen Elastizitätsmodul A bei einer Belastung von 2,0 cN/dtex bei 100°C aufweist, der weniger als 3,5 cN/(tex·%) beträgt.

**2.** Reifen (1) nach Anspruch 1,
wobei der organische Faserkord (16) eine Dehnung bei einer spezifischen Belastung von 2,0 cN/dtex bei 100°C aufweist, die 7,0 bis 13,2% beträgt.

**3.** Reifen (1) nach Anspruch 1 oder 2,
wobei der organische Faserkord (16) einen Verdrillungsfaktor K von 2100 bis 4300 aufweist.

**4.** Reifen (1) nach einem der Ansprüche 1 bis 3,
wobei der organische Faserkord (16) ein Produkt G × E von 1000 bis 2500 aufweist, worin G eine Belastung (N) bei 3% Dehnung darstellt und E eine Anzahl an Korden pro 50 mm Breite (Enden/50 mm) in einer Reifenaxialrichtung darstellt.

5. Reifen (1) nach einem der Ansprüche 1 bis 4,
wobei der organische Faserkord (16) innerhalb der Gürtel-verstärkenden Schicht (15) einen Dehnungsgrad von 2,0 bis 5,0% aufweist und einen Modul einer Belastungs-Dehnungs-Kurve bei 100°C bei dem Dehnungsgrad (%) aufweist, der 1,0 bis 5,0 cN/(tex·%) beträgt.

6. Reifen (1) nach einem der Ansprüche 1 bis 5,

wobei der Reifen (1) zudem einen Laufstreifen (2) umfasst, und
ein Produkt T × A von 35 oder weniger aufweist, worin T eine Dicke (mm) des Laufstreifens (2) darstellt, und A den Elastizitätsmodul (cN/(tex·%)) bei einer Belastung von 2,0 cN/dtex bei 100°C des organischen Faserkords (16) darstellt.

7. Reifen (1) nach einem der Ansprüche 1 bis 6,
wobei ein Abstand zwischen der Gürtelschicht (7) und der Gürtel-verstärkenden Schicht (15) 0,25 bis 0,40 mm beträgt.

8. Reifen (1) nach einem der Ansprüche 1 bis 7,
wobei der organische Faserkord (16) einen Fadenwinkel (31) von 30 Grad oder größer aufweist.

9. Reifen (1) nach einem der Ansprüche 1 bis 8,
wobei der Reifen (1) ein Produkt F × A von 0,16 oder weniger aufweist, worin F eine Dicke (mm) von einer äußeren Oberfläche (23) des Kords der Gürtel-verstärkenden Schicht (15) bezogen auf eine Reifenradialrichtung zu einer äußeren Grenzfläche der Gürtel-verstärkenden Schicht (15) bezogen auf die Reifenradialrichtung darstellt, und A den Elastizitätsmodul (cN/(tex·%)) bei einer Belastung von 2,0 cN/dtex bei 100°C des organischen Faserkords (16) darstellt.

10. Reifen (1) nach einem der Ansprüche 1 bis 9,
wobei der Reifen (1) ein Produkt L × A von 10,0 oder weniger aufweist, worin L einen Abstand (mm) von einem Laufstreifenrillenboden (21) zu der Gürtel-verstärkenden Schicht (15) darstellt, und A den Elastizitätsmodul (cN/(tex·%)) bei einer Belastung von 2,0 cN/dtex bei 100°C des organischen Faserkords (16) darstellt.

11. Reifen (1) nach einem der Ansprüche 1 bis 10,
wobei der organische Faserkord (16) eine Verdrillungszahl von 35 bis 60 Drehungen/10 cm aufweist.

12. Reifen (1) nach einem der Ansprüche 1 bis 11,
wobei der organische Faserkord (16) eine Belastung G bei 3% Dehnung von 18 bis 45 N aufweist.

13. Reifen (1) nach einem der Ansprüche 1 bis 12,
wobei der organische Faserkord (16) eine Gesamtfeinheit von 2500 bis 4000 dtex aufweist.

14. Reifen (1) nach einem der Ansprüche 1 bis 13,
wobei eine Anzahl an Enden pro 50 mm Breite in einer Reifenaxialrichtung des organischen Faserkords (16) 30 bis 60/50 mm beträgt.

15. Reifen (1) nach Anspruch 6,
wobei der Laufstreifen (2) eine Dicke T von 5,0 bis 12,0 mm aufweist.

**Revendications**

1. Pneumatique (1), comprenant une couche de ceinture (7) et une couche de renfort de ceinture (15),

la couche de renfort de ceinture (15) comprenant au moins un câblé en fibres organiques (16) comportant un câblé en fibre de polyéthylène téréph-talate,
**caractérisé en ce que** le câblé en fibres organiques (16) présente un module d'élasticité A à une charge de 2,0 cN/dtex à 100 °C qui est inférieur à 3,5 cN/(tex-%).

2. Pneumatique (1) selon la revendication 1, dans lequel le câblé en fibres organiques (16) présente un allongement à une charge spécifique de 2,0 cN/dtex à 100 °C qui est de 7,0 à 13,2 %.

3. Pneumatique (1) selon la revendication 1 ou 2,
   dans lequel le câblé en fibres organiques (16) présente un coefficient de torsion K de 2100 à 4300.

4. Pneumatique (1) selon l'une quelconque des revendications 1 à 3,
   dans lequel le câblé en fibres organiques (16) présente un produit de G $\times$ E de 1000 à 2500, où G représente une charge (N) à 3 % d'allongement et E représente un nombre de câblés par 50 mm de large (extrémités/50 mm) dans une direction axiale du pneu.

5. Pneumatique (1) selon l'une quelconque des revendications 1 à 4,
   dans lequel le câblé en fibres organiques (16) dans la couche de renfort de ceinture (15) présente un degré d'allongement de 2,0 à 5,0 % et un module d'une courbe charge-allongement à 100 °C au degré d'allongement (%) qui est de 1,0 à 5,0 cN/(tex-%).

6. Pneumatique (1) selon l'une quelconque des revendications 1 à 5,
   dans lequel le pneu (1) comprend en outre une bande de roulement (2) et présente un produit de T $\times$ A de 35 ou moins, où T représente une épaisseur (mm) de la bande de roulement (2) et A représente le module d'élasticité (cN/(tex-%)) à une charge de 2,0 cN/dtex à 100 °C du câblé en fibres organiques (16).

7. Pneumatique (1) selon l'une quelconque des revendications 1 à 6,
   dans lequel une distance entre la couche de ceinture (7) et la couche de renfort de ceinture (15) est de 0,25 à 0,40 mm.

8. Pneumatique (1) selon l'une quelconque des revendications 1 à 7,
   dans lequel le câblé en fibres organiques (16) présente un angle de filament (31) de 30 degrés ou plus.

9. Pneumatique (1) selon l'une quelconque des revendications 1 à 8,
   dans lequel le pneumatique (1) présente un produit de F $\times$ A de 0,16 ou moins, où F représente une épaisseur (mm) depuis une surface extérieure (23) du câblé de la couche de renfort de ceinture (15), par rapport à une direction radiale du pneu vers une interface extérieure de la couche de renfort de ceinture (15) par rapport à la direction radiale du pneu, et A représente le module d'élasticité (cN/(tex-%)) à une charge de 2,0 cN/dtex à 100 °C du câblé en fibres organiques (16).

10. Pneumatique (1) selon l'une quelconque des revendications 1 à 9, dans lequel le pneu (1) présente un produit de L $\times$ A de 10,0 ou moins, où L représente une distance (mm) entre le fond d'une rainure de bande de roulement (21) et la couche de renfort de ceinture (15) et A représente le module d'élasticité (cN/(tex-%)) à une charge de 2,0 cN/dtex à 100° C du câblé en fibres organiques (16).

11. Pneumatique (1) selon l'une quelconque des revendications 1 à 10, dans lequel le câblé en fibres organiques (16) présente un nombre d'enroulements de 35 à 60 tours/10 cm.

12. Pneumatique (1) selon l'une quelconque des revendications 1 à 11, dans lequel le câblé de fibres organiques (16) présente une charge G à 3 % d'allongement de 18 à 45 N.

13. Pneumatique (1) selon l'une quelconque des revendications 1 à 12, dans lequel le câblé en fibres organiques (16) présente une finesse totale de 2500 à 4000 dtex.

14. Pneumatique (1) selon l'une quelconque des revendications 1 à 13, dans lequel un nombre d'extrémités par 50 mm de largeur dans une direction axiale du pneumatique dans le câblé en fibres organiques (16) est de 30 à 60/50 mm.

15. Pneumatique (1) selon la revendication 6,
    dans lequel la bande de roulement (2) présente une épaisseur T de 5,0 à 12,0 mm.

FIG.1

FIG.2

FIG.3

FIG.4A

FIG.4B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019188834 A
- WO 2020174848 A1
- WO 2020145024 A1
- WO 2005032854 A1
- DE 112019006708 T5
- WO 2021039739 A1

- JP S4811335 A
- US 4414370 A
- JP S596207 A
- JP H558005 B
- JP H1313522 A
- US 5010166 A

**Non-patent literature cited in the description**

- annual research report TREND. Toagosei Co., Ltd., 2000, vol. 3, 42-45